(19) Europäisches Patentamt
European Patent Office
Office européen des brevets

(11) Veröffentlichungsnummer: **0 114 358**
**B1**

(12) # EUROPÄISCHE PATENTSCHRIFT

(45) Veröffentlichungstag der Patentschrift: **10.12.86**

(51) Int. Cl.⁴: **C 09 D 3/49**, C 09 D 3/72, C 09 D 5/44, C 25 D 13/06, C 08 G 18/40, C 08 G 18/80

(21) Anmeldenummer: **83112898.8**

(22) Anmeldetag: **21.12.83**

(54) **Wässriges Überzugsmittel.**

(30) Priorität: **23.12.82 DE 3247756**

(43) Veröffentlichungstag der Anmeldung: **01.08.84 Patentblatt 84/31**

(45) Bekanntmachung des Hinweises auf die Patenterteilung: **10.12.86 Patentblatt 86/50**

(84) Benannte Vertragsstaaten: **AT BE CH DE FR GB IT LI NL SE**

(56) Entgegenhaltungen:
**DE - A - 2 360 831**
**FR - A - 2 393 822**
**US - A - 3 419 510**

**Die Akte enthält technische Angaben, die nach dem Eingang der Anmeldung eingereicht wurden und die nicht in dieser Patentschrift enthalten sind.**

(73) Patentinhaber: **Herberts Gesellschaft mit beschränkter Haftung, Christbusch 25, D-5600 Wuppertal 2 (DE)**

(72) Erfinder: **Patzschke, Hans-Peter, Dr., Am Heckendorn 71, D-5600 Wuppertal 2 (DE)**
Erfinder: **Ehmann, Eduard, Löhener Strasse 35, D-4322 Sprockhövel (DE)**

(74) Vertreter: **Türk, Dietmar, Dr. rer. nat. et al, Türk, Gille + Hrabal Patentanwälte Bruckner Strasse 20, D-4000 Düsseldorf 13 (DE)**

EP 0 114 358 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft ein wässriges Überzugsmittel, insbesondere für die Elektrotauchlackierung, enthaltend

A) carboxylgruppenhaltige Polyester

B) blockierte Polyisocyanate

C) glycidylgruppenhaltige Polymere

D) gegebenenfalls hydroxylgruppenhaltige Polyester und/oder Acrylatharze.

Der Einsatz von Kunstharzen, die mit Wasser verdünnbar sind, ist für die Lacktechnik von grosser Bedeutung, weil durch geringen Gehalt an organischen Lösungsmitteln den Umweltschutzbedingungen entgegengekommen und die Feuer- und Explosionsgefahr herabgesetzt wird.

Es ist bekannt, pulverförmige hochmolekulare Verbindungen wie Epoxidharze vom Epichlorhydrin-Bisphenol-Typ mit einem Molekulargewicht von etwa 1000 und höher in die Badflüssigkeit einzutragen. Dabei treten jedoch Probleme hinsichtlich einer gleichmässigen Dispergierung des Pulvers auf. In der DE-A-1621886 werden sie dadurch gelöst, dass als Hauptkomponente ein filmbildendes ionisches Polycarbonsäureharz mit einem elektrischen Abscheideäquivalent von 1000 bis 20000 und einer Säurezahl von 30 bis 300, insbesondere Maleinatöl oder Acrylharz, verwendet wird, welches dann mit dem Pulver gemeinsam abgeschieden wird.

Nach der EP-A-15035 wird ein festes Epoxidharz-Pulver in ein wasserverdünnbares Maleinatöl eingearbeitet.

Gemäss DE-A-3038243 wird das feste Epoxidharz-Pulver in Kombination mit festen und/oder flüssigen organischen Vernetzern wie Melamin- oder Harnstoffharzen, Dicyandiamid oder substituierten Biguaniden in wasserverdünnbare Polyester oder modifizierte Alkydharze eingearbeitet.

Gemäss DE-B-2164844 wird das Pulver als Hauptkomponente mit einem organischen Lösungsmittel benetzt, das in Wasser praktisch unlöslich ist und auch das Pulver nicht anlöst. Anschliessend wird in Wasser suspendiert, das 0,05 bis 5 Gew.-Teile einer grenzflächenaktiven Verbindung enthält. Nach beiden Verfahren gelang es bisher nicht stabile elektrophoretische Überzugsmittel herzustellen, die Vorteile gegenüber dem bekannten Eigenschaftsniveau bringen. Es treten entweder Fällungserscheinungen zwischen Trägerharz und Pulverharz auf, oder die mechanischen oder korrosionsschützenden Eigenschaften genügten nicht den gesteigerten Anforderungen. Die Herstellung geeigneter Pulver mit möglichst niedriger Teilchengrösse bedeutet einen wirtschaftlich nicht vertretbaren Aufwand.

In der DE-A-2824418 werden carboxylgruppenhaltige Polyester beschrieben, die in Kombination mit blockierten Polyisocyanaten, veresterten Polyglycidylethern und/oder hydroxylgruppenhaltigen Polyestern und/oder Acrylatharzen zu wässrigen Überzugsmitteln verarbeitet werden können, mit denen helle Einschichtlackierungen erhalten werden. Durch elektrophoretische Abscheidung an der Anode ist ein rationelles, automatisches Arbeitsverfahren möglich. Die Eigenschaften der eingebrannten Filme lassen jedoch noch einige Wünsche offen, z.B. nach einer grösseren Detergentienbeständigkeit, einer geringen Geruchsbelästigung und grösseren Schichtdicken.

Der vorliegenden Erfindung liegt die Aufgabenstellung zugrunde, die zuletzt genannten Nachteile zu vermeiden. Es wurde nun überraschenderweise gefunden, dass man durch eine Kombination von carboxylgruppenhaltigen Polyestern, blockierten Polyisocyanaten und glycidylgruppenhaltigen Polymeren sowie gegebenenfalls hydroxylgruppenhaltigen Polyestern und/oder Acrylatharzen wässrige Überzugsmittel erhält, mit denen ein breites, verbessertes Eigenschaftsspektrum im obigen Sinne erzielt werden kann.

Gegenstand der Erfindung ist demgemäss ein wässriges Überzugsmittel, insbesondere für die Elektrotauchlackierung, enthaltend

A) carboxylgruppenhaltige Polyester mit einer Säurezahl von 30 bis 150, einer Hydroxylzahl von 20 bis 150 und einer Patton'schen Alkydkonstante von 0,9 bis 1,2 aus zwei- und/oder mehrwertigen, aliphatischen und/oder cycloaliphatischen gesättigten Alkoholen, aliphatischen, cycloaliphatischen und/oder monocyclischen aromatischen zwei- und/oder mehrbasischen Polycarbonsäuren und gegebenenfalls linearen oder verzweigten, gesättigten oder ungesättigten, aliphatischen und/oder cycloaliphatischen $C_3$ bis $C_{20}$-Monoalkoholen oder Monocarbonsäuren,

B) blockierte Polyisocyanate,

C) glycidylgruppenhaltige Polymere,

D) gegebenenfalls hydroxylgruppenhaltige Polyester und/oder Acrylatharze,

dadurch gekennzeichnet, dass, bezogen auf das Gesamtgewicht der im Überzugsmittel enthaltenen Bindemittel A) bis D),

A) die Komponente A) in einer Menge von 40 bis 90 Gew.-% vorliegt,

B) die Komponente B) in einer Menge von 5 bis 30 Gew.-% vorliegt,

C) die Komponente C) freie Epoxidgruppen enthaltende glycidylgruppenhaltige Polymere sind und in einer Menge von 5 bis 40 Gew.-% vorliegen, und

D) die Komponente D) in einer Menge von 0 bis 20 Gew.-% vorliegt.

Das Überzugsmittel gemäss der Erfindung enthält, wie dies auf diesem technischen Gebiet bekannt ist, aufgrund des Einbringens von Lösungen der Bindemittel auch noch geringe Mengen organische Lösungsmittel. Die obere Grenze für den Anteil an organischen Lösungsmitteln liegt bei etwa 15 Gew.-%, zweckmässig bei etwa 10 Gew.-% und besonders bevorzugt bei etwa 5 Gew.-%, bezogen auf das Gesamtgewicht des wässrigen Überzugsmittels. Dies sind extrem niedrige Werte.

Die Komponente A), der carboxylgruppenhaltige Polyester, ist das sogenannte Grundharz des wässrigen Überzugsmittels. Es ist, wie dies auf diesem technischen Gebiet bekannt ist, durch Neutralisation wasserverdünnbar und kann geringe Mengen organischer Lösemittel enthalten. Zur

Herstellung des wässrigen Überzugsmittels werden die anderen Komponenten zugesetzt. Die Komponenten B), blockiertes Polyisocyanat, und C), glycidylgruppenhaltige Polymere, können als Pulver oder in Form von Lösungen in die Lösung des Grundharzes eingearbeitet werden. Dies wird später weiter erläutert. Ein besonderer Vorteil der Erfindung liegt darin, dass man durch Zusatz von ausschliesslich Lösungen der Bindemittel-Komponenten des wässrigen Überzugsmittels stabile Überzugsmittel, d.h. Lacke mit einem breiten, verbesserten Eigenschaftsspektrum erzielen kann. Man hätte erwarten müssen, dass beim Einarbeiten der glycidylgruppenhaltigen Polymeren in Form von Lösungen in eine Lösung, die carboxylgruppenhaltige Harze enthält, eine unerwünschte Reaktion eintritt. Dies ist aber überraschenderweise nicht der Fall. Man vermeidet auf diese Weise auch die Pulverherstellung und die Probleme hinsichtlich einer ausreichenden Dispergierung von Pulvern.

Sofern die Überzugsmittel die Komponente D) enthalten, werden diese hydroxylgruppenhaltigen Polyester und/oder Acrylatharze in Form von Lösungen oder, wenn sie flüssige Konsistenz haben, als solche Flüssigkeiten in das wässrige Überzugsmittel eingearbeitet.

Die carboxylgruppenhaltigen Polyester der Komponente A) sind Umsetzungprodukte aus zwei- und/oder mehrwertigen aliphatischen und/oder cycloaliphatischen gesättigten Alkoholen, aliphatischen, cycloaliphatischen und/oder monocyclischen aromatischen und zwei- und/oder mehrbasischen Polycarbonsäuren und gegebenenfalls linearen und/oder verzweigten, gesättigten oder ungesättigten aliphatischen und/oder cycloaliphatischen $C_3$ bis $C_{20}$-Monoalkoholen oder Monocarbonsäuren. Die Mengenverhältnisse der Ausgangskomponenten errechnen sich unter Verwendung der Patton'schen Alkydkonstante aus den Molverhältnissen, die zu den geforderten Säurezahlen und Hydroxylzahlen des Harzes führen. Die Auswahl der einzelnen Ausgangskomponenten ist dem Fachmann unter Berücksichtigung dieser Zielsetzung bekannt. Die Säurezahl liegt zweckmässig bei 30 bis 150, die Hydroxylzahl bei 20 bis 150 und die Patton'sche Alkydkonstante bei 0,9 bis 1,2. Das mittlere Molekulargewicht ($\overline{M}_n$) liegt zweckmässig bei etwa 1000 bis 6000, vorzugsweise bei etwa 2000 bis 4000, gemessen gegen Polystyrol als Eichsubstanz. Besonders bevorzugt sind carboxylgruppenhaltige ölfreie Polyester, wie sie in der US-A-3053783 oder der oben erwähnten DE-A-2824418 beschrieben sind.

Diese Polyester enthalten vorzugsweise 0,3 bis 3,0, besonders bevorzugt 0,5 bis 2,5 Milliäquivalente aliphatische, cycloaliphatische und/oder monocyclische aromatische Dicarbonsäuren pro Gramm Harz einkondensiert. Von den drei- oder vierbasischen cyclischen Carbonsäuren sind zweckmässig 0,8 bis 2,0, vorzugsweise 0,9 bis 1,8, besonders bevorzugt 1,1 bis 1,5 Millimol pro Gramm Harz über nur eine Carboxylgruppe an den Polyester gebunden. Als Polycarbonsäuren werden drei- und/oder mehrbasische Polycarbonsäuren eingesetzt, vorzugsweise drei- und/oder vierbasische Säuren.

Die Herstellung dieser Polyester erfolgt in an sich bekannter Weise durch Polykondensation der Ausgangsstoffe, wobei zur Vermeidung von Trübungen oder Gelbildungen bevorzugt stufenweise gearbeitet wird:

1. Die Veresterung von bevorzugt aromatischen und cycloaliphatischen Dicarbonsäuren, die kein intramolekulares Anhydrid bilden können, erfolgt bevorzugt mit Dialkoholen, die entweder sekundäre OH-Gruppen oder durch β-Substitution sterisch behinderte primäre OH-Gruppen enthalten, wobei durch Alkoholüberschuss ein OH-gruppenhaltiger Polyester entsteht. Die Alkohole enthalten vorzugsweise 2 bis 21, besonders bevorzugt 4 bis 8 C-Atome. Die Dicarbonsäuren enthalten vorzugsweise 5 bis 10 C-Atome, besonders bevorzugt 6 C-Atome. Beispiele hierfür sind Isophthalsäure und Terephthalsäure, 1,3- und 1,4-Cyclohexandicarbonsäure oder alkylsubstituierte Dicarbonsäuren wie Butylisophthalsäure. Besonders bevorzugt wird Isophthalsäure. Zum Erzielen von Verzweigungen kann ein Teil der Dicarbonsäuren durch eine entsprechende Menge Tricarbonsäure wie Trimellithsäureanhydrid in das Harzmolekül über alle Carboxylgruppen einkondensiert werden. Andererseits können auch Dimethylester wie Terephthalsäuredimethylester oder 1,4-Cyclohexandimethylester durch Umesterung eventuell in Gegenwart von Umesterungskatalysatoren in den Polyester eingeführt werden.

Als Dialkohole werden bevorzugt eingesetzt Neopentylglykol, Hydroxypivalinsäureneopentylglykolester, Hexandiol-2,5, 1,4-Bis-(hydroxymethyl)-cyclohexan, 1,1-Isopropyliden-bis-(p-phenoxy)-2-propanol, 2,2,4-Trimethylpentandiol-1,3.

Als Dialkohol kann auch der Glycidylester von α-verzweigten Fettsäuren, wie Versaticsäure, verwendet werden, weil die Fettsäure hydrolysestabil in den Molekülverband eingebaut ist. In Spezialfällen ist auch der Einsatz von Epoxidharzen möglich, deren Epoxidgruppen mit Monoalkoholen umgesetzt worden sind. Ein anteilweiser Einsatz von Polyolen mit mehr als zwei OH-Gruppen wie Trimethylolpropan oder Pentaerythrit ist zum Einstellen geeigneter OH-Zahlen und Viskositäten möglich. Das gleiche gilt für eine geringfügige Modifizierung zur Elastifizierung mit langkettigen Dialkoholen wie Hexandiol-1,6 oder von aliphatischen Dicarbonsäuren wie Adipinsäure. Die Veresterung dieses Vorkondensats wird in bekannter Weise azeotrop oder in der Schmelze bei erhöhten Temperaturen (über 190 °C) vorgenommen und liefert ein klares Produkt mit einer Säurezahl von 0 bis 50, besonders 5 bis 25 und einer Viskosität von 200 bis 3000 mPas bei 25 °C gemessen in 75%iger Butylglykol-Lösung.

2. Um die Löslichkeit im wässrigen alkalischen Medium zu ermöglichen, müssen in die OH-haltigen Polyester zusätzlich Carboxylgruppen eingeführt werden. Dazu erfolgt eine Umsetzung bei Temperaturen unter 190 °C mit einer aromatischen oder cycloaliphatischen Dicarbonsäure, die bevorzugt durch Defunktionalisieren mit einem

langkettigen, aliphatischen hydrophoben Monoalkohol aus einer Polycarbonsäure mit drei oder vier Carboxylgruppen wie Trimesinsäure, Hemimellithsäure, Prehnitsäure, Mellophansäure usw. entstanden ist. Besonders einfach gestaltet sich das Verfahren bei Einsatz von anhydridhaltigen Verbindungen wie Trimellithsäureanhydrid, Pyromellithsäureanhydrid oder entsprechenden hydrierten Ringsystemen sowie Cyclopentantetracarbonsäureanhydrid oder Pyrazintetracarbonsäureanhydrid. Die Polycarbonsäuren werden im Zweitopfverfahren stöchiometrisch mit soviel Monoalkohol umgesetzt, dass eine Dicarbonsäure erhalten bleibt, die anschliessend zu dem OH-gruppenhaltigen Polyester bei Temperaturen von etwa 150 bis 190 °C zugegeben wird.

In der Praxis hat sich die Herstellung geeigneter carboxylgruppenhaltiger Halbester in Gegenwart des OH-gruppenhaltigen Polyesters als Eintopfverfahren durch Zugabe von etwa stöchiometrischen Mengen Monoalkohol und Trimellithsäureanhydrid in der angegebenen Reihenfolge bewährt. Als Monoalkohol können eingesetzt werden gradkettige und/oder verzweigte, gesättigte und/oder ungesättigte, primäre, sekundäre und/oder tertiäre, besonders bevorzugt primäre und/oder sekundäre Alkohole. Es können auch Gemische, insbesondere isomere Gemische dieser Alkohole eingesetzt werden. Bevorzugt sind aliphatische $C_6$ bis $C_{18}$-Monoalkohole sowie Benzylalkohol und seine Alkylsubstitutionsprodukte. Besonders bevorzugt werden verzweigtkettige $C_8$ bis $C_{13}$-Iso-Monoalkohole. Besonders hydrolysestabile Halbester werden durch Verwendung von α-verzweigten Monoalkoholen oder sekundären Monoalkoholen wie Cyclohexanol oder sekundären Methyl-Octylalkohol erhalten. Durch den Aufbau des Harzes wird gewährleistet, dass die durch Hydrolyse entstehenden ersten Spaltprodukte – Monoalkohol und Trimellithsäure-Monoester – ohne Störungen elektrophoretisch mit dem Film abgeschieden werden.

Die Molverhältnisse der Gesamtrezeptur werden so gewählt, dass eine für den jeweiligen Anwendungszweck geeignete Viskosität erreicht wird. Sie beträgt etwa 200 bis 3000, zweckmässig 250 bis 2000 mPas, bevorzugt 300 bis 1500 mPas, 50%ig in Butylglykol gemessen bei 25 °C. Sie kann ebenso wie das Molekulargewicht durch Mischen von Harzen mit höherer und niedrigerer Viskosität, bzw. Molekulargewicht erreicht werden. Die Patton'sche Alkydkonstante (K = Gesamtmolzahl geteilt durch die Zahl der Säureäquivalente) bewegt sich dabei zwischen 0,9 und 1,2, zweckmässig von 0,93 bis 1,05, bevorzugt zwischen 0,94 und 1,0. Die obere Grenze der Säurezahl liegt bevorzugt unter 100, besonders bevorzugt unter 60; die untere Grenze der Säurezahl liegt bevorzugt über 35, besonders bevorzugt über 40. Der carboxylgruppenhaltige Polyester enthält mindestens eine, bevorzugt mindestens zwei Carboxylgruppen pro Molekül mit einem $pK_a$-Wert von 1 bis 8, besonders 2,5 bis 6, um die Wasserlöslichkeit durch Salzbildung mit einer niedrigmolekularen Base zu erzielen. Der $pK_a$-Wert ist der negative dekadische Logarithmus der sauren Dissoziationskonstante. Ist die Säurezahl zu gering, so ist die Löslichkeit zu niedrig; ist sie zu hoch, so bewirkt der hohe Neutralisationsgrad eine steigende Elektrolyse, die zu Oberflächenstörungen führt. Der gewählte Alkoholüberschuss ergibt im fertigen Harz eine Hydroxylzahl von etwa 10 bis 150, bevorzugt von 30 bis 90. Es werden Harze bevorzugt, die bei niedriger Säurezahl eine relativ hohe Hydroxylzahl enthalten.

Die Polykondensation erfolgt aceotrop oder in der Schmelze bei Reaktionstemperaturen zwischen etwa 150 bis 240 °C, bevorzugt zwischen 160 bis 210 °C. Nach Erreichen der gewünschten Abstellwerte (Viskosität, Säurezahl) wird auf etwa 100 bis 120°C abgekühlt und mit glykolischen oder alkoholischen Lösungsmitteln wie Ethylenglykolmonobutylether, Ethylenglykol-monoethylether, Diethylenglykol-dimethylether, Propylenglykolmonomethylether, Diacetonalkohol, sek.-Butanol, Isopropanol usw. verdünnt, um eine verarbeitungsfähige Lösung zu erhalten. Der Festkörper des gelösten Harzes beträgt etwa 60 bis 90 Gew.-% und richtet sich nach der Viskosität der Lösung. Es wird eine gute verarbeitbare Lösung mit möglichst hohem Festkörper angestrebt.

Komponente B) sind blockierte Polyisocyanate mit im Mittel mehr als einer Isocyanatgruppe, bevorzugt mindestens zwei Isocyanatgruppen pro Molekül. Sie sollen in der wässrigen Phase bei etwa neutralem bis schwach basischem pH-Wert lagerstabil sein, bei Wärmeeinwirkung von etwa 140 bis 210 °C aufspalten und mit den im Harzverband noch vorhandenen reaktiven Hydroxyl- und/oder Carboxylgruppen vernetzen. Blockierte Polyisocyanate werden durch Umsetzen stöchiometrischer Mengen Polyisocyanat mit monofunktionellen Verbindungen mit aktivem Wasserstoff erhalten. Die Reaktionskomponenten sowie gegebenenfalls Katalysatoren werden vorzugsweise bei Temperaturen von etwa 50 bis 80 °C umgesetzt, eventuell in Gegenwart von inerten Lösungsmitteln. Durch Kühlung wird verhindert, dass die Reaktionstemperatur über etwa 100 bis 120 °C ansteigt.

Es eignen sich aromatische, aliphatische und cycloaliphatische Polyisocyanate. Typische Beispiele sind Isomere bzw. Isomerengemische von Toluylendiisocyanat, 4,4'-Diphenylmethandiisocyanat sowie ihre Hydrierungsprodukte wie Dicyclohexylmethandiisocyanat. Ausserdem finden Verwendung Hexan-1,6-diisocyanat, 1,6-Diisocyanato-2,2,4-Trimethylhexan und 1-Isocyanato-methyl-3-isocyanato-1,5,5-trimethylcyclohexan. Es können auch die durch Dimerisation oder Trimerisation entstandenen höhermolekularen Polyisocyanate oder NCO-Addukte, die durch geeignete Umsetzung von Diisocyanaten mit Wasser oder niedrigmolekularen Polyolen wie Trimethylolpropan oder Triäthylisocyanurat entstehen, verwendet werden. Derartige Produkte werden im Handel angeboten, wie Triphenylmethan-4,4',4''-triisocyanat (Desmodur R), das Biuret aus Hexamethylendiisocyanat und Wasser (Desmodur N) oder das Addukt aus Toluylendiisocyanat und Trimethylolpropan (Desmodur L). Kettenabbruch oder Kettenverlängerungen können auch hier 5 je nach Funktionalität – durch Umsetzen mit Verbindungen erfolgen, die reaktiven Wasserstoff enthalten, womit Amid-, Urethan- oder Harnstoffverbindungen entstehen. Geeignete isocyanathaltige Präpolymere werden auch durch Reaktion von Polyglykoläther, Polyesterpolyolen, Polyätherpolyolen, Polycaprolactonpolyolen, Polycaprolactampolyolen oder Polyaminoamiden mit überschüssigen Polyisocyanaten bei Temperaturen von etwa 30 bis 100 °C hergestellt, eventuell unter Zusatz von Katalysatoren wie Dibutylzinndilaurat oder tertiären Aminen.

Zur Steuerung der anwendungstechnischen Eigenschaften kann die vorhandene Zahl an Isocyanatgruppen durch Umsetzung mit gesättigten oder ungesättigten Monoalkoholen oder entsprechenden sekundären Aminen verschiedener Kettenlänge reduziert werden.

Als Blockierungsmittel sind geeignet Phenole, Kresole, Lactame, Oxime, Acetessigester, Thiophenole, Phthalimid, Imidazol, Acetylaceton, Malonester, Alkohole usw. Es wird Caprolactam, Phenol oder Kresol und Methyl-ethyl-ketoxim bevorzugt. Werden Schutzgruppen verwendet, die nur bei höheren Temperaturen abspalten und schwerflüchtig sind, wie höhere Alkohole, so bleiben diese Komponenten zum grossen Teil als Weichmacher im Film. Durch Zumischen geeigneter Katalysatoren in einer Konzentration von etwa 0,1 bis 2 Gew.-%, bezogen auf Harzfestkörper kann die Einbrenntemperatur gesenkt werden. Es eignen sich hierfür organische Metallverbindungen wie Zinnoctoat, Dibutylzinndilaurat, Eisen- oder Zinkacetylacetonat.

Als Komponente C eignen sich glycidylgruppenhaltige Polymere, später auch kurz Epoxidharze genannt, in flüssiger oder fester Form. Besonders werden 1,2-epoxidgruppenhaltige Harze verwendet, die im Mittel mehr als eine Epoxidgruppe, vorzugsweise mindestens zwei Epoxidgruppen pro Molekül enthalten und ein Molekulargewicht über 350, besonders über 850 aufweisen.

Sie können hergestellt werden durch

1. Einführen von Glycidylgruppen in alkalischem Medium über z.B. Epichlorhydrin,

a) in aliphatische, cycloaliphatische oder aromatische OH-funktionelle Harze, z.B. Epoxidnovolake, unter Bildung von Polyglycidylethern,

b) in aliphatische, cycloaliphatische oder aromatische COOH-funktionelle Harze unter Bildung von Polyglycidylestern, oder

c) in aliphatische, cycloaliphatische oder aromatische $NH_2$-funktionelle Harze unter Bildung von Polyglycidylaminen,

2. Einpolymerisieren von ungesättigten Glycidylmonomeren der allgemeinen Formel

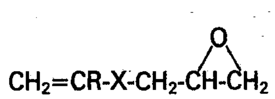

in Acrylpolymerisate, wobei R für Wasserstoff, $-CH_3$ oder $-C_2H_5$ und X für -COO-, -CONH- und/oder $-CH_2$-O stehen.

Besonders bevorzugt gemäss 1. ist, dass die 1,2-epoxidgruppenhaltigen Harze Polyglycidylether der allgemeinen Formel sind

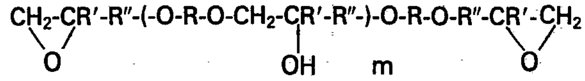

worin bedeuten

R =
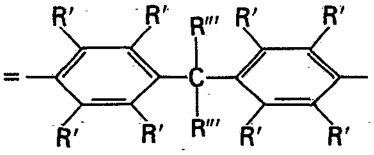

R' = $-C_nH_{2n+1}$, Wasserstoff, Halogen

R'' = $-(CR'_2)_n-$

R''' = Wasserstoff, $-C_nH_{2n+1}$ und/oder -C(Halogen)$_3$

m = 0 bis 8

n = 1 bis 3

Vorzugsweise bedeuten R' Wasserstoff, R'' $-CH_2-$ und R''' $-CH_3$.

Sie haben ein Epoxidäquivalentgewicht über 170, vorzugsweise über 400, und zweckmässig unter 3000, vorzugsweise unter 2000, und können auch in hydrierter Form eingesetzt werden. Solche Harze sind Umsetzungsprodukte von Epichlorhydrin mit Dioxy-diphenylmethan (Bisphenol F) oder Dioxydiphenylpropan (Bisphenol A). Epoxidierte Polyglycidylether können auch andere Grundkomponenten enthalten, wie Triglycidylisocyanurat, heterocyclische Diglycidylverbindungen (DE-A-1816095), substituierte Hydantoine wie N,N-Diglycidyl-5,5'-dimethylhydantoin (US-A-3391097), Dicyclopentadien-diepoxid oder 1-Epoxidethyl-3,4-epoxidcyclohexan.

Um die Funktionalität der Polyglycidylether zu verringern, können die Epoxidgruppen anteilweise mit Monocarbonsäuren, die möglichst verseifungsstabile Estergruppen bilden, wie Benzoesäure, Dimethylolpropionsäure, Isopalmitinsäure oder Versaticsäure und/oder lineare, verzweigte, oder cyclische, gesättigte oder ungesättigte Monoalkohole verschiedener Kettenlänge umgesetzt werden. Bevorzugte Kettenverlängerungsmittel sind organische Polyalkohole wie Hexandiol-1,6 oder Dioxydiphenylpropan, insbesondere polymere Polyole wie Polyoxyalkylenglykole oder Polyetherpolyole und/oder aromatische oder cycloaliphatische Polycarbonsäuren, die keine intramolekulare Anhydridbildung gestatten, wie Isophthalsäure, Cyclohexan-1,4-dicarbonsäure oder dimere Fettsäuren. Bei Einbau von Polyalkoholen oder Polycarbonsäuren mit mehr als zwei funktionellen Gruppen wie Trishydroxyethylisocyanurat oder Trimethylolpropan erhöht sich die Funktionalität.

Unter glycidylgruppenhaltige Polymere gemäss 2. werden bevorzugt Epoxid-Acrylpolymere verstanden, die 2 bis 20 Gew.-% Glycidyl(meth)acrylat, N-Glycidyl(meth)acrylamid oder Allylglycidylether neben anderen Monomeren, die bevorzugt keine weiteren reaktiven Gruppen enthalten, einpolymerisiert haben. Hierzu zählen (Meth)acrylsäureester mit gesättigten linearen, verzweigten

oder cycloaliphatischen C 1 bis C 18-Monoalkoholen oder unsubstituierten oder substituierten Styrolen. Die Auswahl des Anteils an weichen und harten Monomeren erfolgt im Zusammenhang mit der gewünschten Härte im eingebrannten Film. Als «weiche» Monomere werden eingesetzt C 2 bis C 18 Acrylsäureester wie Ethylacrylat, n-Butylacrylat oder Ethylhexylacrylat oder C 5 bis C18 Methacrylsäureester wie Laurylmethacrylat oder Ethylhexylmethacrylat sowie n-Butylmethacrylat.

Als harte Monomere werden verwendet C 1 bis C 4 Methacrylsäureester wie Methylmethacrylat oder tert.-Butylmethacrylat sowie Methylacrylat, Styrol oder Vinyltoluol. Geeignete Malein- oder Fumarsäureester mit C 1 bis C 18 Monoalkoholen wie Fumarsäure- oder Maleinsäure-di-butylester können auch einpolymerisiert werden. In geringem Umfang können zum Erzielen bestimmter Effekte auch hydroxylgruppenhaltige Monomere, besonders solche mit sekundären Hydroxylgruppen wie Hydroxyalkyl(meth)acrylsäureester oder auch (Meth)acrylsäure oder Maleinsäurehalbester eingebaut werden. Bevorzugt werden Epoxidacryl-Copolymere mit mindestens 5 oder höchstens 15 Gew.-% Glycidyl(meth)acrylat, die besonders bevorzugt mit überwiegend weichen Monomeren copolymerisiert werden. Das Epoxidäquivalentgewicht beträgt mindestens 200, besonders mindestens 400 und höchstens etwa 5000, besonders höchstens 2000. Das mittlere Molekulargewicht ist stark vom Polymerisationsverfahren abhängig und kann zwischen 500 und 100000 liegen. Das mittlere Zahlenmittel liegt mindestens bei 1000, besonders mindestens bei 2000 sowie höchstens bei 60000, besonders höchstens bei 10000. Niedrige Molekulargewichte werden durch Lösungspolymerisation in organischen Lösemitteln wie Alkoholen und Glykolethern bei etwa 60 bis 145 °C unter Zusatz von radikalischen Initiatoren wie Peroxiden, Hydroperoxiden, Perestern oder thermisch spaltbaren Azoverbindungen erhalten. Nach Auspolymerisieren des Ansatzes kann das Lösemittel bei Temperaturen von 60 bis 120 °C, gegebenenfalls unter Anlegen von Vakuum weitgehend abdestilliert werden und nach Anneutralisieren der vorhandenen Carboxylgruppen auf einen Festkörper von etwa 75 bis 50 Gew.-% mit Wasser verdünnt werden.

Zum Erzielen von höheren Molekulargewichten erfolgt die Polymerisation durch langsames Zugeben der Monomerenmischung in eine stark gerührte wässrige Phase bei Temperaturen von 20 bis 100 °C, bevorzugt 60 bis 95 °C, gegebenenfalls unter Zusatz von bis zu 3 Gew.-% an Polymerisationsreglern wie Laurylmercaptan, tertiär-Butyl-o-thiokresol, Thiosalicylsäure, Dimeres-α-Methylstyrol oder Buten-1-ol. Das Verhältnis von Wasser zu Monomerengemisch wird so gewählt, dass das auspolymerisierte Produkt einen Festkörper von etwa 20 bis 50 Gew.-% enthält. Als Initiator werden im allgemeinen wasserlösliche Radikalbildner verwendet wie Wasserstoffperoxid oder Ammoniumperoxodisulfat.

Zur Verbesserung der Fliesseigenschaften beim Einbrennen sowie der Flexibilität und Schlagfestigkeit der gehärteten Überzüge werden als Komponente D bis 20 Gew.-%, bevorzugt 5 bis 15 Gew.-% eines hydroxylgruppenhaltigen, langkettigen Modifizierungsmittels auf Basis veresterter Polyglycidylether und/oder ungesättigter oder gesättigter Polyester und/oder (Meth)acrylat-Copolymerisate mit einer OH-Zahl von 50 bis 650, bevorzugt 100 bis 500 und einem mittleren Molekulargewicht ($\overline{M}n$) von 300 bis 7000, bevorzugt 1000 bis 5000 zugesetzt. Die Harze müssen in einem solchen Molekulargewichtsbereich liegen, dass sie beim Einbrennen nicht mehr flüchtig sind, jedoch bei Wärmeeinwirkung eine verbesserte Fliessfähigkeit erzielen.

Die Herstellung geeigneter Harze ist bekannt und erfolgt in üblicher Weise durch aceotrope oder Schmelzkondensation der Ausgangsprodukte eventuell in Gegenwart geeigneter Katalysatoren. Ester von Polyglycidylethern wie z. B. flüssigen Epoxidharzen werden durch Umsetzung mit soviel synthetischer gesättigter oder trocknender Monofettsäure, wie Isononansäure, Kokosvorlauffettsäure, Sojafettsäure, Tallölfettsäure, Leinölfettsäure, isomerisierter Leinölfettsäure oder Synourinfettsäure enthalten, dass alle Epoxidgruppen umgesetzt sind, die OH-Gruppen jedoch unverestert bleiben. Nach einer besonderen Ausführungsform werden z. B. feste Epoxidharze mit Hydroxycarbonsäuren wie Dimethylolpropionsäure, Milchsäure oder Hydroxystearinsäure in Gegenwart von Triphenylphosphin umgesetzt. Nach einer anderen Ausführungsform werden Polyglycidylether des Bisphenol A mit Aminoalkoholen mit einer sekundären NH-Gruppe umgesetzt, z. B. Diethanolamin, Di-n-butanolamin, Methylethanolamin, Diispropanolamin oder N-Cyclohexylethanolamin.

Durch vollständige Veresterung der Ausgangskomponenten wird gewährleistet, dass die Säurezahl der Harze unter 5, bevorzugt unter 2 mg KOH/g Feststoff liegt.

Geeignete OH-gruppenhaltige Polyester werden auch durch Veresterung von Polyalkoholen, Monoalkoholen, Di- und Tricarbonsäure(anhydriden) hergestellt, wobei durch die Wahl der Mengenverhältnisse eine Patton'sche Alkydkonstante von 1,00 bis 1,20, bevorzugt 1,03 bis 1,10 eingestellt wird. Es werden die gleichen Rohstoffe wie beim carboxylgruppenhaltigen Polyester bevorzugt mit dem Unterschied, dass zum Erzielen einer höheren Elastizität als Dicarbonsäure auf ringförmige Dicarbonsäuren verzichtet und nur langkettige, aliphatische Dicarbonsäuren wie Azelainsäure, Sebazinsäure oder dimere Fettsäure verwendet werden. Die Säurezahl dieser Polyester liegt unter 25, zweckmässig unter 15 mg KOH/g.

Durch Zusatz von geeigneten OH-gruppenhaltigen Copolymerisaten nach D können die Eigenschaften im Hinblick auf Umgriff, Härte und Elastizität oder Korrosionsschutz, je nach Auswahl der geeigneten Monomere variiert werden. Beispiele für aliphatische Alkoholgruppen enthaltende Vinylmonomere sind Hydroxyalkyl(meth)acrylsäureester wie Hydroxypropylacrylat, Butandiolmonomethacrylat, 2,2-Dihydroxypropylmethacrylat, Diethylenglykolmonomethacrylat, N-Hydroxyalkyl-(meth)-acrylsäureamide, z.B. N-(2-Hydroxyethyl)-methacrylamid, N,N-Bis-(hydroxyethyl)-acrylamid, N-2-Hydroxy-1,1-bis(hydroxymethyl)-ethylmethacrylamid, Allylalkohol oder Polyalkoholmonoallylether, z.B. Trimethylolpropan-monoallylether oder Pentaerythritmonoallylether. Ausser den OH-gruppenhaltigen Monomeren werden (Meth)acrylsäureester, Styrol, Vinyltoluol, Dialkylmaleinate oder -fumarate, Acrylnitril usw. eingesetzt. Die OH-Gruppen können auch dadurch eingebaut werden, dass carboxylgruppenhaltige Copolymerisate mit Alkylenoxiden, z.B. Ethylenoxid, Propylenoxid umgesetzt werden. Es werden Copolymere, die primäre OH-Gruppen enthalten, bevorzugt. Die Copolymerisation wird in üblicher Weise durch Erwärmen in organischen Lösungsmitteln wie sekundär Butanol, Ethylglykol oder Butylglykol, durchgeführt unter Zusatz von in Monomeren löslichen radikalischen Initiatoren wie tert.-Butylperoctoat, tert.-Butylhydroperoxid, Cumolhydroperoxid, Di-tert.-butylperoxid oder Azobis-isobutyronitril.

Um die mechanischen und chemischen Eigenschaften der Lacküberzüge optimal einzustellen, können auch gegebenenfalls geringe Mengen von Polykohlenwasserstoffen wie Polyleutadienöle, Cumaronindenharze oder Formaldehydkondensationsharze wie Phenolharze, Melaminharze, Benzoguanaminharze oder veretherte methylolierte (Meth)acrylamidcopolymere zugesetzt werden, wobei deren Menge zweckmässig unter 10 Gew.-%, bezogen auf das Gesamtgewicht des Überzugsmittels, liegt.

Zum Herstellen eines geeigneten Überzugsmittels (Lackes) werden mindestens 40 Gew.-Teile, besonders mehr als 50 Gew.-Teile oder höchstens 90 Gew.-Teile, besonders weniger als 80 Gew.-Teile carboxylgruppenhaltiger Polyester gemischt mit mindestens 5 Gew.-Teilen, besonders mehr als 10 Gew.-Teilen und höchstens 40 Gew.-Teile, besonders weniger als 30 Gew.-Teile Epoxidharz und mindestens 5 Gew.-Teile und höchstens 30 Gew.-Teile eines blockierten Isocyanats, gegebenenfalls unter Zusatz von 0 bis 15 Gew.-Teilen, speziell 5 bis 12 Gew.-Teilen eines hydroxylgruppenhaltigen Polyesters und/oder Acrylatharzes.

Bei zu niedrigem Gehalt an carboxylgruppenhaltigem Polyester kann die Stabilität der Dispersion gefährdet werden; bei zu hohem Gehalt ist die Vernetzung des Films ungenügend. Die Beladbarkeit des carboxylgruppenhaltigen Polyesters mit neutralen Harzkombinationsmitteln nimmt im allgemeinen mit steigender Säurezahl zu. Durch den höheren Anteil an Carboxylgruppen pro Molekül steigt gleichzeitig die Gefahr einer Gelierung durch vorzeitige Reaktion mit den Epoxidgruppen. Optimale Eigenschaften werden bei möglichst vollständiger Umsetzung der funktionellen Gruppen innerhalb der Harzkombination bei der thermischen Verfilmung erreicht.

Das Einarbeiten des Epoxidharzes und blockierten Isocyanates kann auf verschiedene Weise erfolgen:

1. Eindispergieren des pulverförmigen, am besten mikronisierten Epoxidharzes und blockierten Isocyanats in den anverdünnten, anneutralisierten, wasserlöslichen carboxylgruppenhaltigen Polyester mit den bei der Lackfertigung üblichen Hilfsaggregaten. Die Herstellung des Pulvers kann durch geeignetes Mahlen oder durch Ausfällen des Harzes aus organischen Lösungen mit Wasser erfolgen, wobei die Teilchengrösse unter 20 µm, besonders unter 10 µm, ganz besonders unter 5 µm sein soll.

2. Einschmelzen oder Auflösen des wasserunlöslichen Epoxidharzes und blockierten Isocyanates in dem carboxylgruppenhaltigen Polyester bei Temperaturen von unter 120 °C, bevorzugt unter 100 °C, eventuell unter Zusatz von organischen Lösungsmitteln, anschliessende Neutralisation mit Aminen und allmähliches Verdünnen mit Wasser, wobei das wasserunlösliche Harz in feiner Verteilung ausfällt. Es ist darauf zu achten, dass durch zu grosse Portionen Wasser kein Fällungsschock ausgelöst wird. Es hat sich als zweckmässig erwiesen, zuerst das Amin, eventuell unter Zusatz einer gleich grossen Menge Wasser einzurühren und dann das restliche Wasser in steigenden Mengen, die etwa einer geometrischen Reihe entsprechen, zuzusetzen. Die Stabilität wird ausserdem durch das eingesetzte Lösungsmittel beeinflusst und ist für die jeweilige Kombination gesondert auszuprüfen. Als Lösungsmittel werden besonders solche bevorzugt, die das Pulver nicht anlösen.

3. Mischung einer carboxylgruppenhaltigen Polyester-Lösung mit einer wässrigen Dispersion des Epoxidharzes und/oder blockierten Isocyanats, die getrennt hergestellt werden.

4. Möglichst konzentriertes Lösen des Epoxidharzes und des blockierten Isocyanats in organischen wasserverdünnbaren Lösemitteln wie Alkoholen, besonders sekundärem Butanol oder Isopropanol, Ethylenglykolmonoalkylether und Propylenglykol-monoalkylether mit niedrigmolekularem Alkylrest ($C_1$ bis $C_4$), Diethylenglykoldimethylether, Diacetonalkohol oder Tetrahydrofuran. Diese organischen Lösungen werden bevorzugt bei Raumtemperatur, gegebenenfalls bis zu etwa 60 °C in die Lösung des carboxylgruppenhaltigen Polyesters eingerührt, mit Aminen oder Aminoalkoholen, besonders tertiären Aminen oder Aminoalkoholen neutralisiert und anschliessend vorsichtig mit Wasser verdünnt. Dies ist das bevorzugte Verfahren.

Um die Verträglichkeit zu erhöhen, ist eine Präkondensation der einzelnen Harzkomponenten mit dem carboxylgruppenhaltigen Polyester möglich. Sie wird durch vorsichtiges Erwärmen auf 60 bis 140 °C durchgeführt und darf nicht zum Gelieren des Ansatzes führen.

Die Wasserlöslichkeit wird durch Salzbildung der carboxylgruppenhaltigen Harze mit basischen Verbindungen erzielt. Hierzu eignen sich Ammoniak, primäre, sekundäre und besonders tertiäre

Amine wie Diethylamin, Triethylamin, Morpholin, ebenso wie Alkanolamine, wie Diisopropanolamin, Dimethylaminoethanol, Triisopropanolamin, Dimethylamino-2-methylpropanol, quarternäre Ammoniumhydroxide oder eventuell auch geringe Mengen Alkylenpolyamine wie Ethylendiamin. Die Auswahl des Amin-Neutralisationsmittels beeinflusst die Stabilität der wässrigen Dispersion und muss dementsprechend geprüft werden. Aminoalkohole werden aufgrund ihrer schwachen Basizität besonders bevorzugt. Die obere Grenze der zugesetzten Aminmenge ergibt sich aus dem 100%igen Neutralisationsgrad der vorhandenen Carboxylgruppen. Die untere Grenze ist durch die Stabilität der hergestellten Dispersion und durch das Eindispergiervermögen des Nachfüllkonzentrates gegeben. Vorzugsweise wird die Base in stöchiometrischem Unterschuss verwendet, berechnet auf die Carboxylfunktion des Reaktionsproduktes, da bei Überneutralisation das Amin nur eine Lösemittelwirkung hat und zu Oberflächenstörungen bei der elektrophoretischen Abscheidung führt. Der Neutralisationsgrad liegt erfahrungsgemäss zwischen 40 und 100%. Der pH-Wert des neutralisierten Überzugsmittels soll etwa 6,5 bis 9,0, bevorzugt 7 bis 8,5 betragen. Liegt der pH-Wert zu niedrig, so treten Dispergierschwierigkeiten auf: das Harz fällt aus; liegt er zu hoch, so tritt eine verstärkte Elektrolyse auf: die Oberfläche verschlechtert sich.

Das Überzugsmittel kann zur Senkung der Viskosität, zur Steuerung der Abscheidespannung und zur Verbesserung der Haftung und des Verlaufs geringe Mengen organischer Lösemittel enthalten. Es wird ein möglichst niedriger Gehalt an organischen Lösemitteln angestrebt.

Als Lösemittel dienen sekundäre Alkohole, Glykolether, Ketoalkohole, Ketone oder aliphatische oder aromatische Kohlenwasserstoffe verschiedener Kettenlänge. Bei pulverförmigem Einbau der Zusatzharze muss berücksichtigt werden, dass die Epoxidharze und blockierte Polyisocyanate in der entstehenden Dispersion nicht angelöst werden, weil sonst Koagulationen auftreten können. Andererseits können Anteile an wasserunlöslichen Lösemitteln den Dispergiervorgang erleichtern und stabilisieren. Bei Einsatz von Epoxidharz und Polyisocyanat-Lösungen ist zu beachten, dass die Stabilität des Endpropduktes von der Konzentration der einzelnen Komponenten abhängig ist. So wird der Lack durch einen zu hohen Gehalt an Epoxidharz wieder in seiner Stabilität beeinträchtigt.

Der Feststoffgehalt des Lackes beträgt nach Verdünnen mit Wasser zweckmässig 5 bis 30 Gew.-%, vorzugsweise 10 bis 20 Gew.-%. Bei zu niedrigem Festkörper ergibt der niedrige Gehalt an Polycarbonsäureharz einen ungleichmässig abgeschiedenen, rauhen Film, bei zu hohem Festkörper steigt durch die hohe Harzkonzentration die Badviskosität, wodurch die Austrags- und Abspülverluste zu hoch werden. Die elektrophoretische Abscheidung erfolgt zweckmässig frühestens 24 Stunden nach Herstellen des Bades. Während dieser Zeit wird zweckmässig kontinuierlich gerührt, um eine gleichmässige Verteilung zu erreichen. Der anodisch zu beschichtende metallisch leitende Gegenstand und die Kathode werden, wie für elektrophoretische Abscheidung bekannt, in ein wässriges Bad getaucht. Es können grundsätzlich alle metallisch leitfähigen Werkstücke beschichtet werden, wie Kupfer, Aluminium, Zinn, Zink, Eisen und Legierungen dieser Metalle, Eisen wird bevorzugt. Während der Abscheidung wird das Bad bei Temperaturen von zweckmässig etwa 20 bis 35 °C gehalten. Bei niedrigeren Temperaturen nimmt die Neigung zu elektrischen Durchbrüchen bei Steigerung der Abscheidespannung ab. Die elektrische Abscheidung beginnt nach weniger als einer Sekunde und kann zur Steigerung der Schichtdicke und des Umgriffs bis auf 3 bis 5 Minuten verlängert werden.

Festkörper, Abscheidetemperatur und -zeit sowie Spannung werden so gewählt, dass die gewünschte Schichtstärke nach Abspülen mit Wasser und Einbrennen erhalten wird.

Die Härtung erfolgt durch kurzes Einbrennen bei hoher Temperatur oder langes Einbrennen bei niedriger Temperatur. Dabei kann die Einbrennzeit von einer Minute bis zu einer Stunde und die Objekttemperatur von mindestens 120 °C, besonders über 140 °C bis maximal 230 °C, bevorzugt unter 200 °C variiert werden. Beim Anlegen einer Spannung von zweckmässig 50 bis 400 Volt wird das carboxylgruppenhaltige Polyesterharz auf der Anode entladen und koaguliert. Der Strom transportiert hierbei die wasserunlöslichen Harze und das eindispergierte Pigment mit. Hierbei verschiebt sich das Verhältnis von wasserlöslichem Polyester zu wasserunlöslichen Harzen und Pigmenten. Gleichzeitig wird Wasser und das zur Neutralisation verwendete Amin im Bad angereichert. Zum Nachfüllen müssen daher konzentriertere Lacke verwendet werden, die diese Änderungen der Mengenverhältnisse ausgleichen, oder sie werden durch geeignete apparative Einrichtungen wie für Elektrodialyse-Verfahren korrigiert. Koagulierte Teilchen, bzw. Teilchen mit zu grossem Durchmesser, werden dabei abfiltriert.

Die Pigmentierung erfolgt in üblicher Weise, z.B. mit Kugelmühle, Dreiwalze, Perl- oder Sandmühle. Das Pigment kann dabei entweder in das wasserunlösliche Festharz eingeschmolzen und dann gemeinsam gemahlen werden, oder es wird in den carboxylgruppenhaltigen Polyester vor oder nach der Neutralisation eingearbeitet.

Zur Pigmentierung können übliche Pigmente, Füllstoffe, Korrosionsschutz-Inhibitoren, wie Strontiumchromat oder Zinkphosphat und Lackhilfsmittel wie Antischaummittel verwendet werden, solange sie mit Wasser im schwach basischen bis neutralem pH-Wert keine störenden Reaktionen eingehen, keine wasserlöslichen störenden Fremdionen einschleppen und beim Altern in nicht aufrührbarer Form ausfallen. Als anorganische Pigmente dienen z.B. Titandioxid, Eisenoxide, Chromoxide, Russ oder auch metallische Pulver wie Zink oder Aluminium, als organische Pigmente können verwendet werden Azo-Pigmente, Phthalocyanine oder polycyclische Pigmente wie Perylen-Derivate. Die durchschnittliche Teilchengrösse sollte nicht über 30 µm, besonders unter 10 µm, ganz besonders unter 5 µm, liegen, weil grössere Pigmentanteile eine unerwünschte Filmrauhigkeit, besonders auf waagrechten Flächen erzeugen. Das Bad wird ständig gerührt, um an der Anodenoberfläche eine gleichmässige Temperatur aufrechtzuerhalten und ein Absetzen der unlöslichen Bestandteile der Dispersion zu verhindern. Das Pigment-Bindemittelverhältnis ist abhängig von der Viskosität des Bindemittels und liegt im allgemeinen zwischen 0,1:1 und 1,5:1.

Als Pigmente können auch die sog. Interferenzpigmente eingesetzt werden (z.B. mit Rutil beschichtete Glimmerplättchen).

Durch Einstellen der Lacke auf einen Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden können.

Die Lacke sind besonders für die Elektrotauchlackierung von Metallen geeignet und geben nach Einbrennen von 30 Minuten bei 180 °C glatte, glänzende, harte Filme mit guter Haftfestigkeit und Elastizität.

Es werden möglichst grosse Schichtdicken erstrebt. Gemäss der Erfindung ist es möglich, bei einer Abscheidung Schichtdicken über 25 µm bis zu etwa 70 µm zu erhalten. Aus Gründen optimaler Eigenschaften liegt die obere Grenze für die Schichtdicke zweckmässig bei etwa 50 µm, besonders bevorzugt bei etwa 45 µm. Die untere Grenze für die Schichtdicke liegt vorzugsweise bei etwa 35 µm.

Herstellungsbeispiele

A) Carboxylgruppenhaltiger Polyester

A1) In einem Reaktionskolben mit beheizter Kolonne wurde unter Inertgas 1047 g Neopentylglykol und 217 g Trimethylolpropan eingefüllt und vorsichtig aufgeschmolzen. Nach Einschalten des Rührwerks wurden 433 g Isophthalsäure und 200 g Trimellithsäureanhydrid zugegeben. Es wurde langsam bis auf 200 °C aufgeheizt, wobei die Kolonnenübergangstemperatur 103 °C nicht überschreiten durfte. Dem klaren Ansatz wurden bei einer Zwischensäurezahl von 13 nacheinander 858 g Isodekanol und 1245 g Trimellithsäureanhydrid zugegeben, wobei die Temperatur auf 150 bis 160 °C abfiel. Die weitere Veresterung wurde zum Vermeiden von Schaum erst bei niedrigerer (150 °C), dann bei höherer Temperatur (170 bis 180 °C) durchgeführt wobei zusätzlich die Kolonne entfernt wurde. Nach Erreichen von

Säurezahl: 49 mg KOH/g Festharz und

Viskosität: 655 mPas (nach Verdünnen auf 50 Gew.-% mit Ethylenglykol-Monobutylether bei 25 °C)

wurde der Ansatz auf 120 °C abgekühlt und anschliessend mit Ethylenglykol-monobutylether und sekundärem Butanol im Verhältnis 1:4 auf einen theoretischen Festkörper von 75 Gew.-% verdünnt.

A2) Reaktion wie A1) unter Einsatz folgender Mengen:

299 g Trimethylolpropan

1326 g Hydroxypivalinsäureneopentylglykolester

865 g Isophthalsäure

806 g Isotridecanol erhitzen, bis zu einer Zwischensäurezahl von 20

774 g Trimellithsäureanhydrid

Säurezahl: 49,7

Viskosität: 233 mPas

B) Verkapptes Polyisocyanat

B1) 2778 g biurethaltiges Trihexamethylisocyanat wurden auf ca. 80 °C angewärmt und 2070 g ε-Caprolactam so langsam zugegeben, dass die Reaktionstemperatur 100 °C nicht übersteigt. Danach wurde so lange bei dieser Temperatur gehalten bis die NCO-Zahl unter 0,3% abgesunken war. Es wurde mit Ethylenglykol-Monobutylether auf einen Festkörper von 90 Gew.-% verdünnt.

B2) 429 g Isophorondiisocyanat wurden auf 80 °C aufgewärmt. Dann wurden 378 g ε-Caprolactam so langsam zugegeben, dass die Reaktionstemperatur 100 °C nicht überschreitet. Danach wurde so lange bei dieser Temperatur gehalten, bis die NCO-Zahl uner 0,1% abgesunken war. Man verdünnt mit Ethylenglykol-Monobutylether auf 80 Gew.-%.

C) Lösung, enthaltend glycidylgruppenhaltige Polymere

C1) 350 g Ethylenglykol-monobutylether wurden auf ca. 120 °C aufgeheizt und 1300 g eines Epoxidharzes auf Basis Bisphenol A mit einem Epoxid-Äquivalentgewicht von ca. 900 langsam zugegeben. Nach Auflösen des festen Harzes wurde mit sek.-Butanol auf einen Festkörper von 65 Gew.-% eingestellt.

C2) In 1200 g Ethylenglykol wurde bei etwa 115 °C in 3 h ein Gemisch von 343 g Hydroxyethylacrylat, 391 g Glycidylmethacrylat, 1217 g Butylacrylat, 437 g Butylmethacrylat und 29 g Tertiär-Butylperbenzoat eingetropft und anschliessend in 5 h unter weiteren Zusätzen von 8,4 und danach 5,6 g Tertiär-Butylperbenzoat auspolymerisiert. Bei 65 bis 80 °C wurde unter vermindertem Druck Lösungsmittel bis zu einem Festkörper von 70 Gew.-% abdestilliert.

Viskosität = 780 mPas (nach Verdünnen auf 60 Gew.-% mit Ethylenglykol-Monoethylether bei 25°C)

Epoxyäquivalent = 866

D1) Hydroxylgruppenhaltiger Polyester

1129 g Trimethylolpropan wurden vorsichtig aufgeschmolzen und dann unter langsamem Rühren auf 120 °C aufgeheizt. Nach Zusatz von 470 g Sebacinsäure wurde bei 200 bis 240 °C bis auf eine Säurezahl von 8 verestert.

D2) Hydroxylgruppenhaltiges Acrylatharz

In 667 g sekundärem Butanol wurde bei etwa 100 °C in 3 h ein Gemisch von 636 g n-Butylacrylat, 344 g Hydroxyethylacrylat und 10 g Bis-(isobutyronitril) eingetropft und anschliessend in 4 h unter Zusatz von 2mal je 3 ml Tertiär-Butylperoctoat auspolymerisiert.

Festkörper = 59,2 Gew.-% (gemessen durch 40 min langes Erwärmen auf 180 °C im Umluft-Trokkenschrank)

Beispiel 1

146,4 g des im Herstellungsbeispiel A1 beschriebenen carboxylgruppenhaltigen Polyesters wurden mit 13,5 g Ethylenglykol-Monobutylether sowie 33,9 g handelsübliches Verlaufsmittel (z.B. Phthalatweichmacher) gemischt. 100,2 g Titandioxid wurden unter Rühren zugegeben und in einer Perlmühle bei maximal 60 °C dispergiert. Nach Abkühlen wurden einzeln nacheinander 46,2 g im Herstellungsbeispiel C1 beschriebene Epoxidharzlösung 18,6 g im Herstellungsbeispiel B1 beschriebene verkappte Polyisocyanatlösung und 43,2 g im Herstellungsbeispiel D1 beschriebener hydroxylgruppenhaltiger Polyester unter Rühren zugegeben.

Nach Zugabe von 36 g Diisopropanolamin (50%ig) wurde mit Wasser auf eine 15%ige wässrige Lösung verdünnt.

Abscheidungsergebnisse siehe Tabelle 1.

Beispiel 2

199,5 g des im Herstellungsbeispiel A1 beschriebenen carboxylgruppenhaltigen Polyesters wurden mit 6 g Ethylenglykol-monobutylether sowie 15,75 g Verlaufsmittel gemischt. 100 g Titandioxid werden unter Rühren zugegeben und in einer Perlmühle bei maximal 60 °C dispergiert. Nach Abkühlen wurden einzeln nacheinander 45,8 g im Herstellungsbeispiel C1 beschriebene Epoxidharzlösung, 11,25 g im Herstellungsbeispiel B1 beschriebene Polyisocyanatlösung und 10,13 g im Herstellungsbeispiel D1 beschriebene hydroxylgruppenhaltiger Polyester unter Rühren zugegeben. Nach Zugabe von 40 g Diisopropanolamin (50%ig) wurde mit Wasser auf eine 15%ige wässrige Lösung verdünnt.

Abscheidungsergebnisse siehe Tabelle 1.

Beispiel 3

173,4 g des im Herstellungsbeispiel A1 beschriebenen carboxylgruppenhaltigen Polyesters wurden mit 6 g Sekundär-Butanol sowie 21,9 g Verlaufsmittel gemischt. 100,2 g Titandioxid wurden unter Rühren zugegeben und in einer Perlmühle bei maximal 60 °C dispergiert. Nach Abkühlen wurden einzeln nacheinander 57,2 g im Herstellungsbeispiel C2 beschriebene Epoxidharzlösung und 37,5 g im Herstellungsbeispiel B2 beschriebene verkappte Polyisocyanatlösung unter Rühren zugegeben. Nach Zugabe von 36 g Diisopropanolamin (50%ig) wurde mit Wasser auf eine 15%ige wässrige Lösung verdünnt.

Abscheidungsergebnisse siehe Tabelle 1.

Beispiel 4

146,4 g des im Herstellungsbeispiel A1 beschriebenen carboxylgruppenhaltigen Polyesters wurden mit 12 g Ethylenglykol-Monobutylether sowie 21,9 g Verlaufsmittel gemischt. 100,2 g Titandioxid wurden unter Rühren zugegeben und in einer Perlmühle bei maximal 60 °C dispergiert. Nach Abkühlen wurden einzeln nacheinander 46,2 g im Herstellungsbeispiel C1 beschriebene Epoxidharzlösung, 36,5 g im Herstellungsbeispiel B2 beschriebene verkappte Polyisocyanatlösung und 30 g im Herstellungsbeispiel D1 beschriebener hydroxylgruppenhaltiger Polyester unter Rühren zugegeben. Nach Zugabe von 36 g Diisopropanolamin (50%ig) wurde mit Wasser auf eine 15%ige wässrige Lösung verdünnt.

Abscheidungsergebnisse siehe Tabelle 1.

**Tabelle 1**

| | Beispiel 1 | Beispiel 2 | Beispiel 3 | Beispiel 4 |
|---|---|---|---|---|
| Ph-Wert | 8,8 | 8,5 | 8,6 | 8,7 |
| Leitfähigkeit [$uScm^{-1}$] | 610 | 750 | 650 | 600 |
| Festkörper [Gew.-%] | 15,1 | 15,3 | 14,9 | 14,65 |
| Pigment: Bindemittel-Verhältnis | 0,5:1 | 0,5:1 | 0,5:1 | 0,5:1 |
| MEQ-Wert | 43,1 | 47,3 | 45,5 | 45,3 |
| Abscheidebedingung | 2 min 25 °C | 2 min 25 °C | 2 min 25 °C | 2 min 25 °C |
| Bonderung | Zinkphosphatierung | Eisenphosphatierung | Zinkphosphatierung | Zinkphosphatierung |
| Abscheidespannung für 35–40 µm | 140 | 250 | 160 | 200 |
| Einbrenntemperatur | 20′ 180 °C | 25′ 175 °C | 20′ 180 °C | 20′ 180 °C |
| Pendelhärte DIN 53157 | 62″ | 133″ | 120″ | 122″ |
| Erichsentiefung DIN 53156 | >9 mm | 6,1/6,7 mm | 8,4/8,5 mm | 4,5 mm |
| Dornbiegung DIN ∅ 8 mm | B.O. | B 1–2 | B 0 | B 1 |
| Schwitzkasten DFIN 50017 SK | 500h i.O. | 500h i.O. | 500h i.O. | 500h i.O. |
| maximal erreichbare blasenfreie Schichtdicke | 60 µm | 40 µm | 50 µm | 45 µm |
| Oberflächenbeurteilung | i.O. | i.O. | i.O. | i.O. |
| Detergentienfestigkeit | i.O. | i.O. | i.O. | i.O. |

i.O. = in Ordnung

**Patentansprüche**

1. Wässriges Überzugsmittel, insbesondere für die Elektrotauchlackierung, enthaltend

A) carboxylgruppenhaltige Polyester mit einer Säurezahl von 30 bis 150, einer Hydroxylzahl von 20 bis 150 und einer Patton'schen Alkydkonstante von 0,9 bis 1,2 aus zwei- und/oder mehrwertigen aliphatischen und/oder cycloaliphatischen gesättigten Alkoholen, aliphatischen, cycloaliphatischen und/oder monocyclischen aromatischen zwei- und/oder mehrbasischen Polycarbonsäuren und gegebenenfalls linearen oder verzweigten, gesättigten oder ungesättigten, aliphatischen und/ oder cycloaliphatischen $C_3$- bis $C_{20}$-Monoalkoholen oder Monocarbonsäuren

B) blockierte Polyisocyanate,

C) glycidylgruppenhaltige Polymere

D) gegebenenfalls hydroxylgruppenhaltige Polyester und/oder Acrylatharze,

dadurch gekennzeichnet, dass, bezogen auf das Gesamtgewicht der im Überzugsmittel enthaltenen Bindemittel A) bis D),

A) die Komponente A) in einer Menge von 40 bis 90 Gew.-% vorliegt,

B) die Komponente B) in einer Menge von 5 bis 30 Gew.-% vorliegt,

C) die Komponente C) freie Epoxidgruppen enthaltende glycidylgruppenhaltige Polymere sind und in einer Menge von 5 bis 40 Gew.-% vorliegen, und

D) die Komponente D) in einer Menge von 0 bis 20 Gew.-% vorliegt.

2. Überzugsmittel nach Anspruch 1, dadurch gekennzeichnet, dass die Polyglycidylether 1,2-epoxidgruppenhaltige Harze mit im Mittel mehr als einer Epoxidgruppe, vorzugsweise mindestens 2 Epoxidgruppen pro Molekül sind und ein Molekulargewicht über 350, vorzugsweise über 850 aufweisen.

3. Überzugsmittel nach Anspruch 2, dadurch gekennzeichnet, dass die Polyglycidylether solche der allgemeinen Formel sind

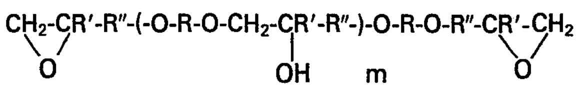

worin bedeuten

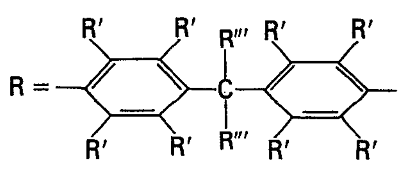

R' = $-C_nH_{2n+1}$, Wasserstoff, Halogen

R'' = $-(CR'_2)_n-$

R''' = Wasserstoff, $-C_nH_{2n+1}$ und/oder -C(Halogen)$_3$

m = 0 bis 8

n = 1 bis 3

4. Überzugsmittel nach Anspruch 3, dadurch gekennzeichnet, dass in der Formel die Symbole die folgenden Bedeutungen haben:

R' ist Wasserstoff

R'' ist $-CH_2-$

R''' ist $-CH_3$.

5. Überzugsmittel nach Anspruch 1, dadurch gekennzeichnet, dass die Polyglycidylester Polymerisationsprodukte sind von 2 bis 20 Gew.-% Glycidyl(meth)acrylat mit ungesättigten Monomeren, die ausser der Doppelbindung keine weiteren reaktiven Gruppen enthalten.

6. Überzugsmittel nach Anspruch 5, dadurch gekennzeichnet, dass die Polyglycidylester im Mittel mehr als eine Epoxidgruppe, vorzugsweise mindestens zwei Epoxidgruppen pro Molekül enthalten und ein mittleres Molekulargewicht $\overline{M}n$ von mindestens 500, vorzugsweise mindestens 1000 aufweisen.

7. Verfahren zur Herstellung eines wässrigen Überzugsmittels, insbesondere für die Elektrotauchlackierung, wobei man

A) 2- und/oder mehrwertige aliphatische und/ oder cycloaliphatische und/oder monocyclische aromatische 2- und/oder mehrbasische Carbonsäuren und gegebenenfalls lineare oder verzweigte, gesättigte oder ungesättigte, aliphatische und/ oder cycloaliphatische $C_3$ bis $C_{20}$-Monoalkohole oder Monocarbonsäuren zu carboxylgruppenhaltigen Polyestern umsetzt mit einer Säurezahl von 30 bis 150, einer Hydroxylzahl von 20 bis 150 und einer Patton'schen Alkydkonstante von 0,9 bis 1,2, und diese vermischt mit

B) blockierten Polyisocyanaten,

C) glycidylgruppenhaltige Polymere,

D) gegebenenfalls hydroxylgruppenhaltigen Polyestern und/oder Acrylatharzen,

dadurch gekennzeichnet, dass, bezogen auf das Gesamtgewicht der im Überzugsmittel enthaltenen Bindemittel A) bis D),

A) die Komponente A) in einer Menge von 40 bis 90 Gew.-% eingesetzt wird,

C) die Komponente C) freie Epoxidgruppen enthaltende glycidylgruppenhaltige Polymere sind und in einer Menge von 5 bis 40 Gew.-% eingesetzt werden, und

D) die Komponente D) in einer Menge von 0 bis 20 Gew.-% eingesetzt wird.

8. Verwendung des Überzugsmittels nach Anspruch 1 bis 7 zur Herstellung von Überzügen, insbesondere nach dem Elektrotauchlackierungsverfahren.

**Claims**

1. An aqueous coating composition, more especially for electrodeposition, containing

A) carboxyl-group-containing polyesters having an acid number of from 30 to 150, a hydroxyl number of from 20 to 150 and a Patton's alkyd constant of from 0,9 to 1,2 of dihydric and/or polyhydric aliphatic and/or cycloaliphatic saturated alcohols, aliphatic, cycloaliphatic and/or monocyclic aromatic dibasic and/or polybasic polycarboxyclic acids and, optionally, linear or branched, saturated or unsaturated, aliphatic and/ or cycloaliphatic $C_3$–$C_{20}$-monoalcohols or monocarboxyclic acids,

B) blocked polyisocyanates,

C) polymers containing glycidyl groups,

D) optionally hydroxyl-group-containing polyesters and/or acrylate resins,

characterized in that, based on the total weight of the binders A) to D) present in the coating composition,

A) component A) is present in a quantity of from 40 to 90% by weight,

B) component B) is present in a quantity of from 5 to 30% by weight,

C) component C) consists of polymers containing glycidyl groups and free epoxide groups and is present in a quantity of from 5 to 40% by weight and

D) component D) is present in a quantity of from 0 to 20% by weight.

2. A coating composition as claimed in claim 1, characterized in that the polyglycidyl ethers are resins containing 1,2-epoxide groups with on average more than one epoxide group and preferably at least two epoxide groups per molecule and have a molecular weight of more than 350 and preferably more than 850.

3. A coating composition as claimed in claim 2, characterized in that the polyglycidyl ethers are those corresponding to the following general formula

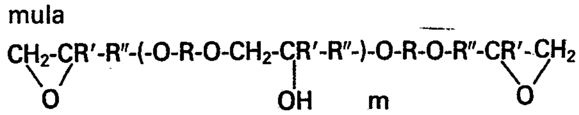

in which

R = 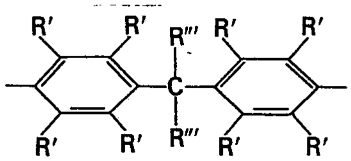

R' = $-C_nH_{2n+1}$, hydrogen, halogen

R'' = $-(CR'_2)_n$

R''' = hydrogen, $-C_nH_{2n+1}$ and/or $-C(halogen)_3$

m = 0 to 8

n = 1 to 3.

4. A coating composition as claimed in claim 3, characterized in that the symbols in the formula have the following meanings:

R' is hydrogen,

R'' is $-CH_2-$ and

R''' is $-CH_3$.

5. A coating composition as claimed in claim 1, characterized in that the polyglycidyl esters are polymerization products of from 2 to 20% by weight glycidyl (meth)acrylate with unsaturated monomers which, apart from the double bond, contain no other reactive groups.

6. A coating composition as claimed in claim 5, characterized in that the polyglycidyl esters contain on average more than one epoxide group and preferably at least two epoxide groups per molecule and have an average molecular weight $\overline{M}n$ of at least 500 and preferably of at least 1000.

7. A process for the production of an aqueous coating composition, more especially for electrodeposition,

A) dihydric and/or polyhydric aliphatic and/or cycloaliphatic and/or monocyclic aromatic dibasic and/or polybasic carboxylic acids and, optionally, linear or branched, saturated or unsaturated, aliphatic and/or cycloaliphatic $C_3$ to $C_{20}$ monoalcohols or monocarboxylic acids being reacted to form carboxylgroup-containing polyesters having an acid number of from 30 to 150, a hydroxyl number of from 20 to 150 and a Patton's alkyd constant of from 0.9 to 1.2 and the polyesters thus formed being mixed with

B) blocked polyisocyanates,

C) polymers containing glycidyl groups,

D) optionally hydroxyl-group-containing polyesters and/or acrylate resins,

characterized in that, based on the total weigt of the binders A) to D) present in the coating composition,

A) component A) is used in a quantity of from 5 to 30% by weight,

B) component B) is used in a quantity of from 5 to 30% by weight,

C) component C) consists of polymers containing glycidyl groups and free epoxide groups and is used in a quantity of from 5 to 40% by weight and

D) component D) is used in a quantity of from 0 to 20% by weight.

8. the use of the coating composition according to claims 1 to 7 for the production of coatings, more especially by electrodeposition.

**Revendications**

1. Système de revêtement aqueux, en particulier pour la peinture par électro-immersion, contenant:

A) des polyesters contenant des groupes carboxyles, avec un indice d'acide de 30 à 150, un indice d'hydroxyle de 20 à 150 et une constante d'alkyde de Patton de 0,9 à 1,2 constituée d'alcools saturés di- et/ou polyaliphatiques et/ou cycloaliphatiques, d'acides polycarboniques aliphatiques, cycloaliphatiques et/ou monocycliques aromatiques di- et/ou polybasiques et le cas échéant, de monoalcools ou d'acides monocarboniques en $C_3$ à $C_{20}$ linéaires ou ramifiés, saturés ou insaturés, aliphatiques et/ou cycloaliphatiques;

B) des polyisocyanates bloqués;

C) des polymères contenant des groupes glycidyles;

D) le cas échéant, des polyesters et/ou des résines acryliques contenant des groupes hydroxyles;

caractérisé par le fait que par rapport au poids total des liants A) à D) contenus dans le système de revêtement aqueux,

A) le constituant A) est présent dans une proportion de 40 à 90% en poids;

B) le constituant B) est présent dans une proportion de 5 à 30% en poids;

C) les constituants C) sont des polymères contenant des groupes époxydes libres et des groupes glycidyles et sont présents dans une proportion de 5 à 40% en poids, et

D) le constituant D) est présent dans une proportion de 0 à 20% en poids.

2. Système de revêtement aqueux selon la revendication 1, caractérisé par le fait que les résines contenant des groupes 1,2-époxyds de l'éther polyglycidilique sont prefsentes dans ce système à raison de plus d'un groupe époxyde, et de préférence d'au moins 2 groupes époxydes par molécule, et ont une masse moléculaire supérieure à 350, et de préférence, supérieure à 850.

3. Système de revêtement selon la revendication 2, caractérisé par le fait que les éthers polyglycidyliques répondent à la forme générale:

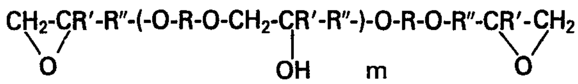

dans laquelle:

R =

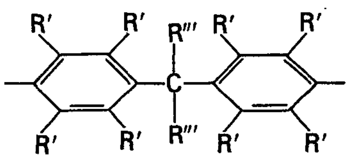

R' = $-C_nH_{2n+1}$, hydrogène, halogène
R'' = $-(CR'_2)_n-$
R''' = hydrogène, $-C_nH_{2n+1}$ et/ou -C(halogène)$_3$
m = 0 à 8
n = 1 à 3.

4. Systeme de revêtement selon la revendication 3, caractérisé par le fait que dans la formule, les symboles ont les significations suivantes:
R' est l'hydrogène
R'' est $-CH_2-$
R''' est $-CH_3$.

5. Système de revêtement selon la revendication 1, caractérisé par le fait que les produits de polymérisation de l'ester polyglycidilique sont constitués par 2 à 20% en poids de (meth)acrylate de glycidyle avec des monomères insaturés qui ne contiennent pas d'autres groupes réactifs en dehors de la double liaison.

6. Système de revêtement selon la revendication 5, caractérisé par le fait que les esters polyglycidyliques présents dans le système contiennent plus d'un groupe époxyde, et de préférence au moins deux groupes époxydes par molécule et présentes une masse moléculaire moyenne M/n d'au moins 500, et de préférence d'au moins 1000.

7. Procédé pour la préparation d'un système de revêtement aqueux, en particulier pour la peinture par électro-immersion, dans lequel:

A) on transforme des acides carboniques di- et/ou polyaliphatiques et/ou cycloaliphatiques et/ou monocycliques aromatiques di- et/ou polybasiques, et le cas échéant, des monoalcools ou des acides monocarboniques en $C_3$ à $C_{20}$ linéaires ou ramifiés, saturés ou insaturés, aliphatiques et/ou cycloaliphatiques, en polyesters contenant des groupes carboxyliques, ayant un indice d'acide de 30 à 150, un indice d'hydroxyle de 20 à 150 et une constante d'alkyde de Patton de 0,9 à 1,2, et dans lequel on mélange ceux-ci à

B) des polyisocyanates bloqués,

C) des polymères contenant des groupes glycydyles

D) le cas échéant, des polyesters et/ou des résines acryliques contenant des groupes hydroxyles,

caractérisé par le fait que, par rapport au poids total des liants A) à D) contenus dans le système de revêtement,

A) le constituant A) est ajouté dans une proportion de 40 à 90% en poids,

B) le constituant B) est ajouté dans une proportion de 5 à 30% en poids,

C) les constituants C) sont ds polymères contenant des groupes époxydes libres et des groupes glycydyles et sont ajoutés dans une proportion de 5 à 40% en poids, et

D) le constituant D) est ajouté dans une proportion de 0 à 20% en poids.

8. Utilisation du système de revêtement selon les revendications 1 à 7, pour la préparation de revêtements, en particulier selon la technique de l'électro-immersion.